# EUROPEAN PATENT SPECIFICATION

(11) **EP 3 620 308 B1**
(45) Date of publication and mention of the grant of the patent: **21.12.2022**
(21) Application number: 19194468.5
(22) Date of filing: 29.08.2019
(51) Int. Cl.: B60C 1/00, C08L 7/00, C08L 9/00, C08L 15/00, C08K 3/04, C08K 3/36, C08L 61/06, C08L 61/22, B60C 9/00

(54) **PNEUMATIC TIRE**
LUFTREIFEN
PNEUMATIQUE

(30) Priority: 04.09.2018 US 201816120852
(43) Date of publication of application: 11.03.2020
(73) Proprietor: The Goodyear Tire & Rubber Company, Akron, OH 44316 (US)
(72) Inventor: TAHON, Julia Martine Francoise Claudine, L-7595 Reckange (LU); AHRENS, Bodo, D-54295 Trier (DE); THOMAS, Jean-Louis Felicien, B-6700 Waltzing (BE); MERSCH, Romain Jack Rodolphe, 57570 Boust (FR); BÖHNER, Thomas Günther, D-60594 Frankfurt am Main (DE); KAES, Christian Jean-Marie, L-9184 Schrondweiler (LU); GOLDEN, James Joseph, North Canton, OH Ohio 44720 (US); POLFER, Pit Jean-Pierre Fernand, 8047 Strassen (LU); VIRLEZ, Geoffrey Stephane Marcel Ghislain, B-6700 Arlon (BE)
(74) Representative: Kutsch, Bernd

(56) References cited:
- EP-A1- 2 716 700
- EP-A1- 2 910 601
- EP-A2- 2 527 161
- US-A1- 2013 153 110

## Description

### Background

Conventionally, the carcass ply component of a tire is a cord-reinforced element of the tire carcass. Often two or more carcass ply components are used in a tire carcass. The carcass ply component itself is conventionally a multiple cord-reinforced component where the cords are embedded in a rubber composition which is usually referred to as a ply coat. The ply coat rubber composition is conventionally applied by calendering the rubber onto the multiplicity of cords as they pass over, around and through relatively large, heated, rotating, metal cylindrical rolls. Such carcass ply component of a tire, as well as the calendering method of applying the rubber composition ply coat, are well known to those having skill in such art. The same applies for the tire belt overlay layer, also formed of textile cords and treated in a similar way as the carcass ply layers.

The ply coat composition and overlay coat composition can have a positive impact on the fuel efficiency of a tire. There is therefore a continuing need for improved ply coat and overlay coat compositions.

US 2013/0153110 describes a tire in accordance with the preamble of claim 1.

### Summary of the Invention

The invention relates to a tire in accordance with claim 1.

Dependent claims refer to preferred embodiments of the invention.

The present invention is directed to a pneumatic tire comprising a textile cord reinforced rubber component, the rubber component comprising a textile cord contacting a rubber composition, the rubber composition comprising:
from 20 to 45 phr of a solution polymerized styrene-butadiene rubber having a bound styrene content ranging from 5 to 25 percent by weight, a vinyl-1,2 content ranging from 5 to 40 weight percent based on the butadiene content, and a Tg ranging from -85 to -50 °C;
from 55 to 80 phr of a polyisoprene rubber selected from the group consisting of natural rubber and synthetic polyisoprene rubber;
from 20 to 60 phr of a filler selected from carbon black, silica, and prehydrophobated silica;
from 1 to 10 phr of a resin selected from the group consisting of carbamic resins, alkyl phenol formaldehyde resins, and phenol formaldehyde resins; and from 0.5 to 5 phr of a methylene donor.

### Brief Description of the Drawing

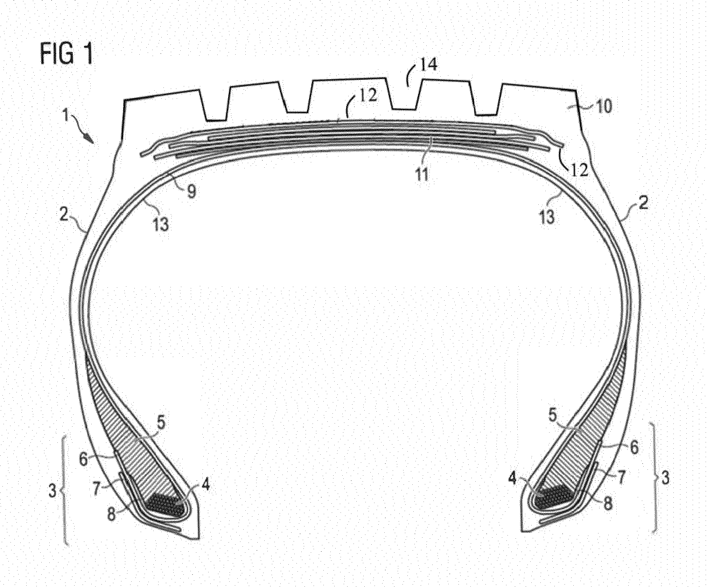

Fig. 1 shows a cross sectional view of a tire according to the present invention.

### Description of Example Embodiments of the Invention

There is disclosed a pneumatic tire comprising a textile cord reinforced rubber component, the rubber component comprising a textile cord contacting a rubber composition, the rubber composition comprising:
from 20 to 45 phr of a solution polymerized styrene-butadiene rubber having a bound styrene content ranging from 5 to 25 percent by weight, a vinyl-1,2 content ranging from 5 to 40 weight percent based on the butadiene content, and a Tg ranging from -85 to -50 °C;
from 55 to 80 phr of a polyisoprene rubber selected from the group consisting of natural rubber and synthetic polyisoprene rubber;
from 20 to 60 phr of a filler selected from carbon black, silica, and prehydrophobated silica;
from 1 to 10 phr of a resin selected from the group consisting of carbamic resins, alkyl phenol formaldehyde resins, and phenol formaldehyde resins; and
from 0.5 to 5 phr of a methylene donor.

FIG. 1 shows a schematic cross section of a tire 1 according to one embodiment of the invention. The tire 1 has a tread 10, an inner liner 13, a belt structure 11 preferably comprising multiple belts covered by a radially outward overlay 12, one or more carcass plies 9, two sidewalls 2, and two bead regions 3 comprising bead filler apexes 5 and beads 4. The example tire 1 is suitable, for example, for mounting on a rim of a vehicle, e.g. a truck or a passenger car. The carcass ply 9 includes a pair of axially opposite end portions 6, each of which is preferably secured to a respective one of the beads 4. Each axial end portion 6 of the carcass ply 9 is preferably turned up and around the respective bead 4 to a position sufficient to anchor each axial end portion 6. The carcass ply 9 is a rubberized ply having a plurality of substantially parallel carcass reinforcing members made of such material as polyester, rayon, or similar suitable organic polymeric compounds. The embodiment of FIG. 1 shows one carcass ply 9. In another example, two or more carcass plies 9 may be used. The turned up portions 6 of the carcass ply 9 may engage the axial outer surfaces of two flippers 8 and axial inner surfaces of two chippers 7. As shown in FIG. 1, the example tread 10 has circumferential grooves 14 each essentially defining a U-shaped opening in the tread 10. The main portion of the tread 10 may be formed of a tread compound, which may be any suitable tread compound or compounds.

The overlay and ply are rubberized using a rubber composition. The overlay and ply a rubberized by contacting textile cords with the rubber composition by calendaring or other methods as are known in the art.

The rubber composition includes from 20 to 45 phr of a styrene-butadiene rubber having a glass transition temperature (Tg) ranging from -85 °C to -50 °C. In one embodiment, the glass transition temperature of the styrene-butdiene rubber ranges from -70 to -55 °C.

A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition. The Tg is determined as a peak midpoint by a differential scanning calorimeter (DSC) at a temperature rate of increase of 10ºC per minute, according to ASTM D7426 or equivalent.

The styrene-butadiene rubber may be functionalized with various functional groups, or the styrene-butadiene rubber may be non-functionalized. In on embodiment the styrene-butadiene rubber is functionalized with an alkoxysilane group and at least one of a primary amine group and thiol group. In one embodiment, the styrene-butadiene rubber is obtained by copolymerizing styrene and butadiene, and characterized in that the styrene-butadiene rubber has a primary amino group and/or thiol group and an alkoxysilyl group which are bonded to the polymer chain. In one embodiment, the alkoxysilyl group is an ethoxysilyl group. In one embodiment, the styrene-butadiene rubber is not functionalized.

In one embodiment, the styrene-butadiene rubber has a bound styrene content ranging from 5 to 25 percent by weight. In one embodiment, the styrene-butadiene rubber has a bound styrene content ranging from 10 to 20 percent by weight. In one embodiment, the styrene-butadiene rubber has a vinyl 1,2 content ranging from 5 to 40 percent by weight, based on the butadiene content of the polymer. In one embodiment, the styrene-butadiene rubber has a vinyl 1,2 content ranging from 25-35 percent by weight, based on the butadiene content of the polymer.

In suitable functionalized styrene-butadiene rubber, the alkoxy silane, primary amino group and/or thiol group may be bonded to any of a polymerization initiating terminal, a polymerization terminating terminal, a main chain of the styrene-butadiene rubber and a side chain, as long as it is bonded to the styrene-butadiene rubber chain. However, the alkoxy silane, primary amino group and/or thiol group is preferably introduced to the polymerization initiating terminal or the polymerization terminating terminal, in that the disappearance of energy at a polymer terminal is inhibited to improve hysteresis loss characteristics.

The styrene-butadiene rubber can be produced by polymerizing styrene and butadiene in a hydrocarbon solvent by anionic polymerization using an organic alkali metal and/or an organic alkali earth metal as an initiator, adding a terminating agent compound having a primary amino group protected with a protective group and/or a thiol group protected with a protecting group and an alkoxysilyl group to react it with a living polymer chain terminal at the time when the polymerization has substantially completed, and then conducting deblocking, for example, by hydrolysis or other appropriate procedure. In one embodiment, the styrene-butadiene rubber can be produced as disclosed in US-B-7,342,070. In another embodiment, the styrene-butadiene rubber can be produced as disclosed in WO-A-2007/047943.

In one embodiment, the solution polymerized styrene-butadiene rubber is as disclosed in WO-A-2007/047943 and is functionalized with an alkoxysilane group and a thiol, and comprises the reaction product of a living anionic polymer and a silane-sulfide modifier represented by the formula

(R⁴O)ₓR⁴_{y}Si-R⁵-S-SiR⁴₃

wherein Si is silicon; S is sulfur; O is oxygen; x is an integer selected from 1, 2 and 3;y is an integer selected from 0, 1, and 2; x+y=3; R⁴ is the same or different and is a (C₁-C₁₆) alkyl; and R' is aryl, and alkyl aryl, or a (C₁-C₁₆) alkyl. In one embodiment, R⁵ is a (C₁-C₁₆) alkyl. In one embodiment, each R⁴ group is the same or different, and each is independently a C₁-C₅ alkyl, and R⁵ is C₁-C₅ alkyl.

Suitable styrene-butadiene rubbers functionalized with an alkoxysilane group and a thiol group are available commercially, such as Sprintan SLR 3402 from Trinseo.

Other suitable styrene-butadiene rubbers include Nipol NS612 from Zeon.

The rubber composition further includes from 55 to 80 phr of a natural rubber or synthetic polyisoprene having at least 96 percent by weight of cis 1,4 content, such as Natsyn 2200 from The Goodyear Rubber & Tire Co.

The rubber composition also includes an in-situ resin. In-situ resins are formed in the rubber composition and involve the reaction of a methylene acceptor and a methylene donor. The term "methylene donor" is intended to mean a compound capable of reacting with the methylene acceptor and generate the resin in-situ. Examples of methylene donors which are suitable for use in the present invention include hexamethylenetetramine, hexamethoxymethylmelamine, hexaethoxymethylmelamine, imino-methoxymethylmelamine, imino-isobutoxymethylmelamine, lauryloxymethylpyridinium chloride, ethoxymethylpyridinium chloride trioxan and hexamethoxymethylmelamine. In addition, the methylene donors may be N-substituted oxymethylmelamines, of the general formula: 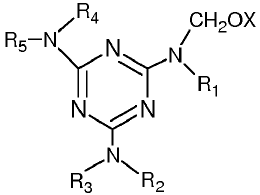
wherein X is hydrogen or an alkyl having from 1 to 8 carbon atoms, R₁^{,} R₂, R₃, R₄ and R₅ are individually selected from the group consisting of hydrogen, an alkyl having from 1 to 8 carbon atoms, the group -CH2OX or their condensation products. Specific methylene donors include hexakis-(methoxymethyl)melamine, N,N',N"-trimethyl/N,N',N"-trimethylolmelamine, hexamethylolmelamine, N,N',N"-dimethylolmelamine, N-methylolmelamine, N,N'-dimethylolmelamine, N,N',N"-tris(methoxymethyl)melamine and
N,N'N"-tributyl-N,N',N"-trimethylol-melamine. The N-methylol derivatives of melamine are prepared by known methods.

The amount of methylene donor that may be present in the rubber composition may vary. In one embodiment, the amount of methylene donor that is present will range from 1 - 5 phr.

The term "methylene acceptor" is known to those skilled in the art and is used to describe the reactant to which the methylene donor reacts to form what is believed to be a methylol monomer. The condensation of the methylol monomer by the formation of a methylene bridge produces the resin. The initial reaction that contributes the moiety that later forms into the methylene bridge is the methylene donor wherein the other reactant is the methylene acceptor. Representative compounds which may be used as a methylene acceptor include but are not limited to resorcinol, resorcinolic derivatives, monohydric phenols and their derivatives, dihydric phenols and their derivatives, polyhydric phenols and their derivatives, unmodified phenol novolak resins, modified phenol novolak resin, phenol formaldehyde resin, resorcinol novolak resins and mixtures thereof. Examples of methylene acceptors include those disclosed in U.S. 6,605,670; U.S. 6,541,551; U.S. 6,472,457; U.S. 5,945,500; U.S. 5,936,056; U.S. 5,688,871; U.S. 5,665,799; U.S. 5,504,127; U.S. 5,405,897; U.S. 5,244,725; U.S. 5,206,289; U.S. 5,194,513; U.S. 5,030,692; U.S.4,889,481; U.S. 4,605,696; U.S. 4,436,853; and U.S. 4,092,455. Examples of modified phenol novolak resins include cashew nut oil modified phenol novolak resin, tall oil modified phenol novolak resin and alkyl modified phenol novolak resin. In one embodiment, the methylene acceptor is a reactive phenol-formaldehyde resin. Suitable reactive phenol-formaldehyde resins include SMD 30207 from SI Group and SP-1068 from SI Group.

Other examples of methylene acceptors include activated phenols by ring substitution and a cashew nut oil modified novolak-type phenolic resin. Representative examples of activated phenols by ring substitution include resorcinol, cresols, t-butyl phenols, isopropyl phenols, ethyl phenols and mixtures thereof. Cashew nut oil modified novolak-type phenolic resins are commercially available from Schenectady Chemicals Inc. under the designation SP6700. The modification rate of oil based on total novolak-type phenolic resin may range from 10 to 50 percent. For production of the novolak-type phenolic resin modified with cashew nut oil, various processes may be used. For example, phenols such as phenol, cresol and resorcinol may be reacted with aldehydes such as formaldehyde, paraformaldehyde and benzaldehyde using acid catalysts. Examples of acid catalysts include oxalic acid, hydrochloric acid, sulfuric acid and p-toluenesulfonic acid. After the catalytic reaction, the resin is modified with the oil.

The amount of methylene acceptor in the second rubber compound may vary. In one embodiment, the amount of methylene acceptor ranges from 0.5 - 5 phr.

The rubber composition also includes from 0.5 - 10 phr of a carbamic resin, also known as a carbamic acid ester resin or urethane-aldehyde resin. Suitable carbamic resins may be produced using methods for example as described in US-A-2015/0119527; US-A-5,559,169; or US-B-8,759,471.

In one embodiment, the carbamic resin is derived from a monofunctional or multifunctional aldehyde A, and an organic compound C having at least one carbamate group -O-CO-NH₂, and an organic radical, where the radical can be a monovalent radical R selected from the group consisting of linear, branched or cyclic aliphatic radicals having from one to thirty carbon atoms, and aralkyl radicals, or a divalent organic radical -R'- selected from the group consisting of linear, branched or cyclic aliphatic diradicals having from two to thirty carbon atoms and bisalkyl aryl radicals having from 8 to 30 carbon atoms.

In one embodiment, R has from two to eight carbon atoms.

In one embodiment, an aliphatic carbamate is used as compound C which is selected from the group consisting of ethyl carbamate, butyl carbamate, hexyl carbamate and 2-ethylhexyl carbamate.

In one embodiment, an araliphatic carbamate is used as compound C which is selected from the group consisting of benzyl carbamate and α,α-dimethylbenzyl carbamate.

In one embodiment, a dicarbamate is used as compound C which is selected from the group consisting of ethylene biscarbamate, 1,2-propylene biscarbamate, 1,3-propylene bis carbamate, and 1,4-butylene biscarbamate.

In one embodiment, a dicarbamate is used as compound C which is selected from the group consisting of xylylene biscarbamate and tetramethylxylylene biscarbamate.

In one embodiment, a monofunctional aldehyde is used as aldehyde A, and which is selected from the group consisting of formaldehyde, acetaldehyde, propionaldehyde, butyraldehyde, n-pentanal, and n-hexanal.

In one embodiment, a multifunctional aldehyde is used as aldehyde A, and which is selected from the group consisting of glyoxal, malonaldehyde, succinaldehyde, and glutaraldehyde.

In one embodiment, the carbamic resin is derived from n-butyl carbamate (also known as butyl urethane) and formaldehyde.

Suitable carbamic resin is available commercially as Alnovol^{®} UF410 from Allnex.

In one embodiment, the carbamic resin may be in the form of a mixture of a first carbamic resin and a phenol novolak, as described for example in US-A-2012/0095152. In one embodiment, the mixture of carbamic resin and phenol novolak is a mixture of a urethane-aldehyde resin UA prepared by condensation of an aldehyde A1 and an alkyl urethane U, and of a novolak PA prepared by reaction of an aldehyde A2 with a phenolic compound P wherein the aldehydes A1 and A2 are independently selected from the group consisiting of formaldehyde, acetaldehyde, propionic aldehyde, butyric aldehyde, and isobutyric aldehyde, the alkyl urethane U is selected from the group consisting of ethyl urethane, butyl urethane, 2-ethylhexyl urethane, and decyl urethane, the phenolic compound P is selected from the group consisting of phenol, o-, m-, and p-cresol, o-, m-, and p-monoalkylphenols with alkyl radicals up to 18 carbon atoms, and the mass ratio of the urethane aldehyde resin UA and the novolak PA is from 90 g:10 g to 10 g:90 g.

In one embodiment, the mixture of carbamic resin and phenol novolak may be an at least partially reacted mixture of a 1) carbamic resin derived from n-butyl carbamate and formaldehyde, and 2) a phenol novolak derived from phenol and formaldehyde. Suitable mixture of carbamic resin and phenol novolak is available as Alnovol PN760 from Allnex.

In general, the rubber composition includes from 1 to 10 phr of a resin selected from the group consisting of carbamic resins, alkyl phenol formaldehyde resins, and phenol formaldehyde resins.

Also included in the rubber composition is from 20 to 60 phr of a filler selected from carbon black, silica, and pre-hydrophobated silica.

In one embodiment the filler includes a pre-hydrophobated precipitated silica. By pre-hydrophobated, it is meant that the silica is pretreated, i.e., the pre-hydrophobated precipitated silica is hydrophobated prior to its addition to the rubber composition by treatment with at least one silane. Suitable silanes include but are not limited to alkylsilanes, alkoxysilanes, organoalkoxysilyl polysulfides and organomercaptoalkoxysilanes.

In an alternative embodiment, the pre-hydrophobated precipitated silica may be pre-treated with a silica coupling agent comprised of, for example, an alkoxyorganomercaptoalkoxysilane or combination of alkoxysilane and organomercaptoalkoxysilane prior to blending the pre-treated silica with the rubber instead of reacting the precipitated silica with the silica coupling agent in situ within the rubber. For example, see US-B-7,214,731.

The prehydrophobated precipitated silica may optionally be treated with a silica dispersing aid. Such silica dispersing aids may include glycols such as fatty acids, diethylene glycols, polyethylene glycols, fatty acid esters of hydrogenated or non-hydrogenated C5 or C6 sugars, and polyoxyethylene derivatives of fatty acid esters of hydrogenated or non-hydrogenated C5 or C6 sugars.

Exemplary fatty acids include stearic acid, palmitic acid and oleic acid.

Exemplary fatty acid esters of hydrogenated and non-hydrogenated C5 and C6 sugars (e.g., sorbose, mannose, and arabinose) include, but are not limited to, the sorbitan oleates, such as sorbitan monooleate, dioleate, trioleate and sesquioleate, as well as sorbitan esters of laurate, palmitate and stearate fatty acids. Exemplary polyoxyethylene derivatives of fatty acid esters of hydrogenated and non-hydrogenated C5 and C6 sugars include, but are not limited to, polysorbates and polyoxyethylene sorbitan esters, which are analogous to the fatty acid esters of hydrogenated and non-hydrogenated sugars noted above except that ethylene oxide groups are placed on each of the hydroxyl groups.

The optional silica dispersing aids if used are present in an amount ranging from 0.1% to 25% by weight based on the weight of the silica, with 0.5% to 20% by weight being suitable, and 1% to 15% by weight based on the weight of the silica also being suitable.

For various pre-treated precipitated silicas see, for example, US-A-4,704,414, US-A-6,123,762 and US-B-6,573,324.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as, only for example herein, and without limitation, silicas commercially available from PPG Industries under the Hi-Sil trademark with designations 210 and 243; silicas available from Solvay, with, for example, designations of Z1165MP, Z165GR and Zeosil Premium 200MP: and silicas available from Degussa AG with, for example, designations VN2 and VN3.

Commonly employed carbon blacks can be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N660, N650, N683, N754, N762, N765, N774, N787, N907, N908, N990 and N991. These carbon blacks have iodine absorptions ranging from 9 to 145 g/kg and DBP number ranging from 34 to 150 cm³/100 g. Blends of carbon blacks may be used, particularly a combination of relatively high and low surface area black to obtain desirable hysteresis, dynamic stiffness and tear strength.

In one embodiment the rubber composition may optionally contain a conventional sulfur containing organosilicon compound. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide.

The amount of the optional sulfur containing organosilicon compound in a rubber composition will vary depending on the level of other additives that are used. Generally speaking, the amount of the compound will range from 0.5 to 20 phr. In one embodiment, the amount will range from 1 to 6 phr.

It is recognized that conventional compounding ingredients may be used in the preparation of the rubber composition. The rubber composition in contact with a textile cord in the finished tire is sulfur cured as a component of the tire. For example, the sulfur cured ply coat rubber composition may contain conventional additives including reinforcing agents, fillers, peptizing agents, pigments, stearic acid, accelerators, sulfur-vulcanizing agents, antiozonants, antioxidants, processing oils, activators, initiators, plasticizers, waxes, pre-vulcanization inhibitors, extender oils and the like. Representative of conventional accelerators may be, for example, amines, guanidines, thioureas, thiols, thiurams, sulfenamides, dithiocarbamates and xanthates which are typically added in amounts of from 0.2 to 3 phr. Representative of sulfur-vulcanizing agents include element sulfur (free sulfur) or sulfur donating vulcanizing agents, for example, an amine disulfide, polymeric polysulfide or sulfur olefin adducts. The amount of sulfur-vulcanizing agent will vary depending on the type of rubber and particular type of sulfur-vulcanizing agent but generally range from 0.1 phr to 3 phr with a range of from 0.5 phr to 2 phr being preferred. Representative of the antidegradants which may be in the rubber composition include monophenols, bisphenols, thiobisphenols, polyphenols, hydroquinone derivatives, phosphites, phosphate blends, thioesters, naphthylamines, diphenol amines as well as other diaryl amine derivatives, para-phenylene diamines, quinolines and blended amines. Antidegradants are generally used in an amount ranging from 0.1 phr to 10 phr with a range of from 2 to 6 phr being preferred. Amine-based antidegradants, however, are not preferred in the practice of this invention. Representative of a peptizing agent that may be used is pentachlorophenol which may be used in an amount ranging from 0.1 phr to 0.4 phr with a range of from 0.2 to 0.3 phr being preferred. Representative of processing oils which may be used in the rubber composition of the present invention include, for example, aliphatic, naphthenic and aromatic oils. The processing oils may be used in a conventional amount ranging from 0 to 30 phr with a range of from 0 to 10 phr being more usually preferred. Initiators are generally used in a conventional amount ranging from 1 to 4 phr with a range of from 2 to 3 phr being preferred.

Accelerators may be used in a conventional amount. In cases where only a primary accelerator is used, the amounts range from 0.5 to 2 phr. In cases where combinations of two or more accelerators are used, the primary accelerator is generally used in amounts ranging from 0.5 to 1.5 phr and a secondary accelerator is used in amounts ranging from 0.1 to 0.5 phr. Combinations of accelerators have been known to produce a synergistic effect. Suitable types of conventional accelerators are amines, disulfides, guanidines, thioureas, thiazoles, thiurams, sulfenamides, dithiocarbamates and xanthates. Preferably, the primary accelerator is a sulfenamide. If a secondary accelerator is used, it is preferably a guanidine, dithiocarbamate or thiuram compound.

In practice, cords of various compositions may be used for the carcass ply or overlay such as, for example, but not intended to be limiting polyester, rayon, aramid and nylon and hybrid cords thereof. Such cords and their construction, whether monofilament or as twisted filaments, are well known to those having skill in such art.

The cord may be made from any fiber suitable for use in a tire as is known in the art. Cord yarns are typically produced as multifilament bundles by extrusion of the filaments from a polymer melt. Cord is produced by drawing fiber into yarns comprising a plurality of the fibers, followed by twisting a plurality of these yarns into a cord. Such yarns may be treated with a spin-finish to protect the filaments from fretting against each other and against machine equipment to ensure good mechanical properties. In some cases, the yarn may be top-coated with a so-called adhesion activator prior to twisting the yarn into cord. The adhesion activator, typically comprising a polyepoxide, serves to improve adhesion of the cord to rubber compounds after it is dipped with a resorcinol-formaldehyde latex (RFL) dip.

The treatment of the cord comprises treating the cord with an aqueous RFL emulsion comprising a resorcinol-formaldehyde resin and one or more elastomer latexes.

In one embodiment, the RFL may include a resorcinol formaldehyde resin, a styrene-butadiene copolymer latex, a vinylpyridine-styrene-butadiene terpolymer latex, and a blocked isocyanate.

In one embodiment, the cord may be initially treated with an aqueous emulsion comprising a polyepoxide, followed by the RFL treatment.

After treatment of the cord in the RFL, or initially in the polyepoxide followed by the RFL, the treated cord is incorporated into a ply layer with the rubber composition to produce a textile cord reinforced rubber component. In one embodiment, the rubber component is a carcass ply. In one embodiment, the rubber component is an overlay.

The rubber component may be included in various types of tires, including passenger, truck, motorcycle, medium truck, off-the-road, and aircraft tires.

Pneumatic tires are conventionally comprised of a generally toroidal shaped casing with an outer circumferential tread adapted to the ground contacting space beads and sidewalls extending radially from and connecting said tread to said beads. The tread may be built, shaped, molded and cured by various methods which will be readily apparent to those skilled in the art.

The invention is further illustrated by the following examples.

### Example 1

In this example, a rubber composition suitable for an overlay is illustrated. Rubber compositions were mixed in a multi-step mixing procedure with amounts (phr) shown in Table 1. Standard amounts of curatives and antidegradants were also included.

The rubber compositions were cured and tested for rebound at 100 C, with results given in Table 2. As seen in Table 2, inventive sample 3 showed higher rebound than control samples 1 and 2, indicating a better rolling resistance performance.

**Table 1**

| Sample No. | 1 | 2 | 3 |
|---|---|---|---|
| Natural Rubber | 100 | 65 | 65 |
| Styrene-Butadiene Rubber¹ | 0 | 35 | 0 |
| Styrene-Butadiene Rubber² | 0 | 0 | 35 |
| Pre-hydrophobated Silica³ | 35 | 35 | 35 |
| Carbamic Resin⁴ | 2.85 | 2.85 | 2.85 |
| HMMM⁵ | 1.1 | 1.1 | 1.1 |

| | | | |
|---|---|---|---|
| ¹ Emulsion polymerized styrene-butadiene, 23 percent by weight styrene and 15 percent by weight vinyl 1,2 based on butadiene content of polymer, as Plioflex 1502 from The Goodyear Tire & Rubber Co. ² Solution polymerized styrene-butadiene functionalized with thiol/alkoxysilyl groups, Tg = -60 °C, 15 percent by weight styrene and 30 percent by weight vinyl 1,2 based on butadiene content of polymer, as SLR 3402 from Trinseo. ³ Precipitated silica surface treated with organosilanes, as Agilon 400 from PPG. ⁴ Carbamic resin mixture of butyl urethane/formaldehyde resin mixed with phenol novolak, as Alnovol PN760 from Allnex. ⁵ Hexamethoxymethylmelamine, 72% by weight ⁶ Sulfenamides and benzothiazoles. | | | |

**Table 2**

| Rebound at 100 C (DIN 53512) | | | |
|---|---|---|---|
| Sample No. | 1 | 2 | 3 |
| Rebound | 75.5 | 78.3 | 79.5 |

### Example 2

In this example, a rubber composition suitable for a carcass ply is illustrated. Rubber compositions were mixed in a multi-step mixing procedure with amounts (phr) shown in Table 3. Standard amounts of curatives and antidegradants were also included.

The rubber compositions were cured and tested for rebound at 100 C, with results given in Table 4. As seen in Table 4, inventive sample 5 showed higher rebound than control sample 4, indicating a better rolling resistance performance.

**Table 3**

| Sample No. | 4 | 5 |
|---|---|---|
| Natural Rubber | 70 | 70 |
| Styrene-Butadiene Rubber¹ | 30 | 0 |
| Styrene-Butadiene Rubber² | 0 | 30 |
| N660 Carbon black | 52.5 | 15 |
| N220 Carbon black | 0 | 12 |
| Silica | 0 | 1.9 |
| Tackifier Resin³ | 3.5 | 2.5 |
| Carbamic Resin⁴ | 0 | 3.5 |
| Phenol Formaldehyde Resin⁵ | 0.72 | 2 |
| HMMM⁶ | 1 | 2.71 |

| | | |
|---|---|---|
| ¹ Emulsion polymerized styrene-butadiene, 23 percent by weight styrene, extended with 37.5 percent by weight oil ² Solution polymerized styrene-butadiene functionalized with thiol/alkoxysilyl groups, 15 percent by weight styrene and 30 percent by weight vinyl 1,2 based on butadiene content of polymer, as SLR 3402 from Trinseo. ³ Octylphenol formaldehyde resin as SP 1068 from SI Group. ⁴ Carbamic resin as butyl urethane/formaldehyde resin, 60 percent by weight on silica, as Alnovol UF410 RHC from Allnex. ⁵ Durez 31459 from Sumitomo Bakelite ⁶ Hexamethoxymethylmelamine, 72% by weight | | |

**Table 4**

| Rebound at 100 C (DIN 53512) | | |
|---|---|---|
| Sample No. | 4 | 5 |
| Rebound | 75 | 81.3 |

## Claims

1. A pneumatic tire comprising a textile cord reinforced rubber component, the rubber component comprising a textile cord contacting a rubber composition, the rubber composition comprising:
from 20 to 45 phr of a solution polymerized styrene-butadiene rubber having a bound styrene content ranging from 5 to 25 percent by weight and a Tg ranging from -85 to -50 °C;
from 55 to 80 phr of a polyisoprene rubber selected from the group consisting of natural rubber and synthetic polyisoprene rubber;
from 20 to 60 phr of a filler selected from carbon black, silica, and prehydrophobated silica;
from 1 to 10 phr of a resin selected from the group consisting of carbamic resins, alkyl phenol formaldehyde resins, and phenol formaldehyde resins;
and from 0.5 to 5 phr of a methylene donor; **characterized in that**
the solution polymerized styrene-butadiene rubber has a vinyl-1,2 content ranging from 5 to 40 weight percent based on the butadiene content.

2. The pneumatic tire of claim 1, wherein the solution polymerized styrene-butadiene rubber is functionalized with an alkoxysilane group and at least one of a primary amino and thiol group.

3. The pneumatic tire of claim 1 or 2, wherein the filler comprises carbon black and silica.

4. The pneumatic tire of at least one of the previous claims, wherein the resin comprises a phenol formaldehyde resin, an alkyl phenol formaldehyde resin, and a carbamic resin derived from n-butylcarbamate and formaldehyde.

5. The pneumatic tire of at least one of the previous claims, wherein the component further comprises a polyester cord in contact with the rubber composition.

6. The pneumatic tire of at least one of the previous claims, wherein the rubber component is a carcass ply (9).

7. The pneumatic tire of at least one of the previous claims, wherein the filler is a prehydrophobated silica.

8. The pneumatic tire of claim 7, wherein the prehydrophobated silica is pretreated with at least one silane selected from the group consisting of alkylsilanes, alkoxysilanes, organoalkoxysilyl polysulfides and organomercaptoalkoxysilanes.

9. The pneumatic tire of claim 7 or 8, wherein the prehydrophobated silica is pretreated or further pretreated with a dispersing aid selected from the group consisting of fatty acids, diethylene glycols, polyethylene glycols, fatty acid esters of hydrogenated or non-hydrogenated C5 or C6 sugars, and polyoxyethylene derivatives of fatty acid esters of hydrogenated or non-hydrogenated C5 or C6 sugars.

10. The pneumatic tire of at least one of the previous claims, wherein the resin is an at least partially reacted mixture of a 1) carbamic resin derived from n-butylcarbamate and formaldehyde, and 2) a phenol novolak derived from phenol and formaldehyde.

11. The pneumatic tire of at least one of the previous claims, wherein the component further comprises a nylon cord contacting the rubber composition.

12. The pneumatic tire of at least one of the claims 1 to 5 and 7 to 11, wherein the component is an overlay (12).

## Patentansprüche

1. Luftreifen, umfassend eine mit Textilkord verstärkte Kautschukkomponente, die Kautschukkomponente umfassend einen Textilkord, der eine Kautschukzusammensetzung berührt, die Kautschukzusammensetzung umfassend:
von 20 bis 45 phr einen lösungspolymerisierten Styrol-Butadien-Kautschuk, der einen Gehalt an gebundenem Styrol in einem Bereich von 5 bis 25 Gewichtsprozent und eine Tg in einem Bereich von -85 bis -50 °C aufweist;
von 55 bis 80 phr einen Polyisoprenkautschuk, der aus der Gruppe ausgewählt ist, bestehend aus Naturkautschuk und synthetischem Polyisoprenkautschuk;
von 20 bis 60 phr einen Füllstoff, der aus Industrieruß, Siliciumdioxid und vorhydrophobiertem Siliciumdioxid ausgewählt ist;
von 1 bis 10 phr einen Harz, der aus der Gruppe ausgewählt ist, bestehend aus Carbaminsäureharzen, Alkylphenol-Formaldehyd-Harzen und Phenol-Formaldehyd-Harzen;
und von 0,5 bis 5 phr einen Methylendonor; **dadurch gekennzeichnet, dass**
der lösungspolymerisierte Styrol-Butadien-Kautschuk einen Vinyl-1,2-Gehalt in einem Bereich von 5 bis 40 Gewichtsprozent, basierend auf dem Butadiengehalt, aufweist.

2. Luftreifen nach Anspruch 1, wobei der lösungspolymerisierte Styrol-Butadien-Kautschuk mit einer Alkoxysilangruppe und mindestens einer von einer Gruppe von primären Aminen und Thiolen funktionalisiert ist.

3. Luftreifen nach Anspruch 1 oder 2, wobei der Füllstoff Industrieruß und Siliciumdioxid umfasst.

4. Luftreifen nach mindestens einem der vorstehenden Ansprüche, wobei das Harz ein Phenol-Formaldehyd-Harz, ein Alkylphenol-Formaldehyd-Harz und ein von n-Butylcarbamat und Formaldehyd abgeleitetes Carbaminsäureharz umfasst.

5. Luftreifen nach mindestens einem der vorstehenden Ansprüche, wobei die Komponente ferner einen Polyesterkord in Berührung mit der Kautschukzusammensetzung umfasst.

6. Luftreifen nach mindestens einem der vorstehenden Ansprüche, wobei die Kautschukkomponente eine Karkasslage (9) ist.

7. Luftreifen nach mindestens einem der vorstehenden Ansprüche, wobei der Füllstoff ein vorhydrophobiertes Siliciumdioxid ist.

8. Luftreifen nach Anspruch 7, wobei das vorhydrophobierte Siliciumdioxid mit mindestens einem Silan vorbehandelt ist, das aus der Gruppe ausgewählt ist, bestehend aus Alkylsilanen, Alkoxysilanen, Organoalkoxysilylpolysulfiden und Organomercaptoalkoxysilanen.

9. Luftreifen nach Anspruch 7 oder 8, wobei das vorhydrophobierte Siliciumdioxid mit einem Dispergierhilfsmittel vorbehandelt oder weiter vorbehandelt ist, das aus der Gruppe ausgewählt ist, bestehend aus Fettsäuren, Diethylenglykolen, Polyethylenglykolen, Fettsäureestern von gehärteten oder ungehärteten C5- oder C6-Zuckern, und Polyoxyethylenderivaten von Fettsäureestern von gehärteten oder ungehärteten C5- oder C6-Zuckern.

10. Luftreifen nach mindestens einem der vorstehenden Ansprüche, wobei das Harz eine mindestens teilweise umgesetzte Mischung aus 1) einem von n-Butylcarbamat und Formaldehyd abgeleiteten Carbaminsäureharz und 2) einem von Phenol und Formaldehyd abgeleiteten Phenolnovolak ist.

11. Luftreifen nach mindestens einem der vorstehenden Ansprüche, wobei die Komponente ferner einen Nylonkord umfasst, der die Kautschukzusammensetzung berührt.

12. Luftreifen nach mindestens einem der Ansprüche 1 bis 5 und 7 bis 11, wobei die Komponente eine Deckschicht (12) ist.

## Revendications

1. Bandage pneumatique qui comprend un composant à base de caoutchouc qui est renforcé avec un câblé en textile, le composant à base de caoutchouc comprenant un câblé en textile qui est mis en contact avec une composition à base de caoutchouc, la composition à base de caoutchouc comprenant :
de 20 à 45 phr d'un caoutchouc de styrène-butadiène qui a été polymérisé en solution, qui possède une teneur en styrène à l'état lié qui se situe dans une plage allant de 5 à 25 % en poids et une valeur Tg qui se situe dans une plage allant de -85 à -50 °C ;
de 55 à 80 phr d'un caoutchouc de polyisoprène, qui est choisi parmi le groupe constitué par du caoutchouc naturel et un caoutchouc de polyisoprène synthétique ;
de 20 à 60 phr d'une matière de charge qui est choisie parmi le noir de carbone, la silice et de la silice qui a été rendue hydrophobe au préalable ;
de 1 à 10 phr d'une résine qui est choisie parmi le groupe constitué par des résines carbamiques, des résines d'alkylphénol formaldéhyde et des résines de phénol formaldéhyde ;
et de 0,5 à 5 phr d'un donneur de groupes méthylène ;
**caractérisé en ce que** le caoutchouc de styrène-butadiène qui a été polymérisé en solution possède une teneur en groupes vinyle 1,2 qui se situe dans une plage allant de 5 à 40 % en poids en se basant sur la teneur en butadiène.

2. Bandage pneumatique selon la revendication 1, dans lequel le caoutchouc de styrène-butadiène qui a été polymérisé en solution est fonctionnalisé avec un groupe alcoxysilane et avec au moins un groupe choisi parmi un groupe amino primaire et un groupe thiol.

3. Bandage pneumatique selon la revendication 1 ou 2, dans lequel la matière de charge comprend du noir de carbone et de la silice.

4. Bandage pneumatique selon au moins une des revendications précédentes, dans lequel la résine comprend une résine de phénol formaldéhyde, une résine d'alkylphénol formaldéhyde et une résine carbamique qui dérive du n-butylcarbamate et du formaldéhyde.

5. Bandage pneumatique selon au moins une des revendications précédentes, dans lequel le composant comprend en outre un câblé en polyester qui est mis en contact avec la composition à base de caoutchouc.

6. Bandage pneumatique selon au moins une des revendications précédentes, dans lequel le composant à base de caoutchouc est une nappe de carcasse (9).

7. Bandage pneumatique selon au moins une des revendications précédentes, dans lequel la matière de charge représente une silice qui a été rendue hydrophobe au préalable.

8. Bandage pneumatique selon la revendication 7, dans lequel la silice qui a été rendue hydrophobe au préalable est soumise à un prétraitement avec au moins un silane qui est choisie parmi le groupe constitué par des alkylsilanes, des alcoxysilanes, des organoalcoxysilyl polysulfures et des organomercatoalcoxysilanes.

9. Bandage pneumatique selon la revendication 7 ou 8, dans lequel la silice qui a été rendue hydrophobe au préalable est soumise à un prétraitement ou est soumise en outre à un traitement préalable avec un adjuvant de mise en dispersion qui est choisi parmi le groupe constitué par des acides gras, des diéthylène glycols, des polyéthylène glycols, des esters d'acides gras de sucres en C5 ou en C6 hydrogénés ou non hydrogénés, et des dérivés de polyoxyéthylène d'ester d'acides gras de sucres en C5 ou en C6 hydrogénés ou non hydrogénés.

10. Bandage pneumatique selon au moins une des revendications précédentes, dans lequel la résine représente un mélange, qui a fait l'objet d'une mise en réaction au moins partielle, de 1) une résine carbamique qui dérive du n-butylcarbamate et de formaldéhyde, et de 2) un phénol novolaque qui dérive de phénol et de formaldéhyde.

11. Bandage pneumatique selon au moins une des revendications précédentes, dans lequel le composant comprend en outre un câblé en nylon qui est mis en contact avec la composition à base de caoutchouc.

12. Bandage pneumatique selon au moins une des revendications 1 à 5 et 7 à 11, dans lequel le composant représente un revêtement (12).
